# EUROPEAN PATENT SPECIFICATION

(11) **EP 4 065 346 B1**
(45) Date of publication and mention of the grant of the patent: **29.05.2024**
(21) Application number: 19953950.3
(22) Date of filing: 25.11.2019
(51) Int. Cl.: B29C 64/153, B29C 64/165, B29C 64/268, B29C 64/282, B29C 64/393, B22F 10/28, B22F 10/38, B22F 12/45, B33Y 10/00, B33Y 30/00, B33Y 50/02, B29C 35/16

(54) **ADDITIVE MANUFACTURING WITH UNIFORM PROPERTY DISTRIBUTIONS**
GENERATIVE FERTIGUNG MIT GLEICHMÄSSIGEN EIGENSCHAFTSVERTEILUNGEN
FABRICATION ADDITIVE PRÉSENTANT DES DISTRIBUTIONS DE PROPRIÉTÉS UNIFORMES

(43) Date of publication of application: 05.10.2022
(73) Proprietor: Hewlett-Packard Development Company, L.P., Spring TX 77389 (US)
(72) Inventor: HUANG, Wei, Palo Alto, CA 94304 (US); DISPOTO, Gary J., Palo Alto, CA 94304 (US)
(74) Representative: Haseltine Lake Kempner LLP
(86) International application number: PCT/US2019/063053
(87) International publication number: WO 2021/107917

(56) References cited:
- WO-A1-2015/106816
- WO-A1-2017/127061
- WO-A1-2019/143314
- WO-A1-2019/143314
- WO-A2-2015/108546
- US-A1- 2016 136 730
- US-A1- 2016 332 374
- US-A1- 2018 250 770
- US-A1- 2019 126 560

## Description

### BACKGROUND

Additive manufacturing systems produce three-dimensional (3D) objects by building up layers of material. Some additive manufacturing systems are referred to as "3D printing devices" because they use inkjet or other printing technology to apply some of the manufacturing materials. 3D printing devices and other additive manufacturing devices make it possible to convert a computer-aided design (CAD) model or other digital representation of an object directly into the physical object. US2016332374A1 discloses generating three-dimensional objects. US2019126560A1 discloses 3D print definition procedures. WO2019143314A1 discloses a three dimensional printing system. US2016/136730 and US2018/250770 disclose printing a slice of a 3D object by selectively activating a subset of lasers in an array of lasers, whereby the subset of lasers coincides with the slice.

### BRIEF DESCRIPTION OF THE DRAWINGS

The accompanying drawings illustrate various examples of the principles described herein and are part of the specification. The illustrated examples are given merely for illustration, and do not limit the scope of the claims.
Fig. 1 is a block diagram of an additive manufacturing device to generate uniform property distributions across a layer of powdered build material, according to an example of the principles described herein.
Fig. 2 is a simplified top view of an additive manufacturing system to generate uniform property distributions across a layer of powdered build material, according to an example of the principles described herein.
Fig. 3 is a flow chart of a method for generating uniform property distributions across a layer of powdered build material, according to an example of the principles described herein.
Fig. 4 is a side view of an additive manufacturing device to generate uniform property distributions across a layer of powdered build material, according to another example of the principles described herein.
Fig. 5 is an isometric view of the laser array over a build area of an additive manufacturing device, according to an example of the principles described herein.
Figs. 6A - 6D depict additive manufacturing with laser arrays to generate a uniform property distribution across a layer of powdered build material, according to an example of the principles described herein.
Figs. 7A - 7D depict additive manufacturing with laser arrays to generate a uniform property distribution across a layer of powdered build material, according to an example of the principles described herein.

Throughout the drawings, identical reference numbers designate similar, but not necessarily identical, elements. The figures are not necessarily to scale, and the size of some parts may be exaggerated to more clearly illustrate the example shown. Moreover, the drawings provide examples and/or implementations consistent with the description; however, the description is not limited to the examples and/or implementations provided in the drawings.

### DETAILED DESCRIPTION

Additive manufacturing systems form a three-dimensional (3D) object through the solidification of layers of a build material. Additive manufacturing systems make objects based on data in a 3D model of the object generated, for example, with a computer-aided drafting (CAD) computer program product. The model data is processed into slices, each slice defining portions of a layer of build material that is to be solidified.

As is known from the prior art, to form the 3D object, a build material, which may be powder, is deposited on a bed. A laser, or other power source is selectively aimed at the powdered build material, or a layer of the powdered build material. The emitted energy from the laser raises the temperature of the powdered build material, causing the portions under the influence of the laser to fuse together or solidify to form a slice of the 3D printed object.

While such additive manufacturing operations have greatly expanded manufacturing and development possibilities, further development may make 3D printing more implementable and effective. For example, geometric accuracy and 3D object properties may be affected by a temperature of the build material throughout the additive manufacturing process. For example, thermal bleed is a phenomenon that results when heat from fused portions of a slice of a 3D printed object transfer to the adjacent free powder that is not to form a part of the 3D printed object. This transfer of heat energy may be enough to partially fuse, or in some examples completely fuse, portions of the free powder. This fusing, or caking, of the free build material affects part geometry.

As another example, uneven temperature distributions may arise within the slice itself. For example, heat transfer may draw heat away from hot fused portions of the 3D printed object towards cool unfused free build material that surrounds the slice. However, portions near the center of the slice do not border the free build material and thus heat transfer is reduced. Accordingly, central portions of a slice may be hotter than edge portions of the slice. This may lead to over-fusing of portions of the slice while other portions are properly fused. Such a non-uniform temperature distribution within the slice of the 3D printed object may also affect part quality. For example, if a subsequent layer of build material is deposited while the underlying layer is still molten, this subsequent layer may fuse earlier than desired or fuse at a different rate than other portions of the subsequent layer. This may result in reduced accuracy in the slice and introduces uncertainty and a lack of control over the manufacturing operation.

Still further, powdered build material that is too hot for too long may affect the quality of the fused product. That is, object properties are affected by the temperature profile of the build material. As a result, portions of the 3D printed part that are hotter for longer periods of time than other portions of the part may result in portions of the product having different mechanical properties.

Accordingly, the present specification describes a device and method for generating uniform property distributions, properties such as temperature, across portions of the surface of the powdered build material. In some example, the portion that has the uniform temperature distribution may be within the boundaries of the slice of the 3D printed object or outside of those boundaries.

Specifically, the present specification describes an additive manufacturing device according to claim 4.

The present specification also describes a method for forming a 3D printed object according to claim 1.

Such devices and methods 1) provide a uniform temperature distribution across slices of 3D printed objects and the surrounding powdered build material, 2) provide 3D printed objects with greater geometric accuracy, 3) change thermal properties at a per-voxel resolution, and 4) fuse individual layers of a 3D printed object. However, it is contemplated that the devices and methods disclosed herein may address other matters and deficiencies in a number of technical areas.

As used in the present specification and in the appended claims, the term "detailing agent" refers to an agent that inhibits fusing, binding, and/or sintering of an area of powdered build material on which the detailing agent is deposited. In one particular example, the detailing agent inhibits fusing, binding, and/or sintering by cooling down the underlying powdered build material.

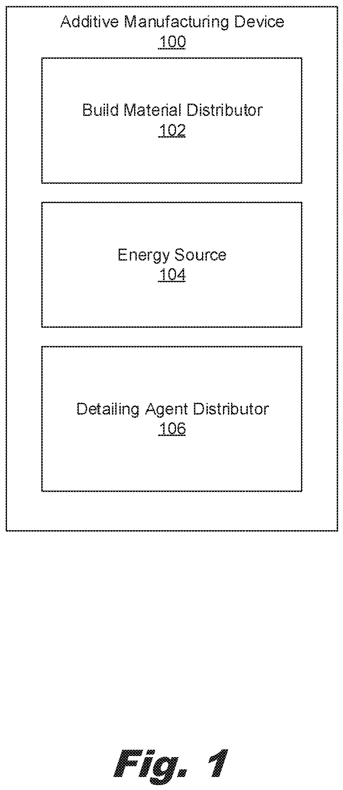

Turning now to the figures, Fig. 1 is a block diagram of an additive manufacturing device (100) to generate uniform property distributions across a layer of powdered build material, according to an example of the principles described herein. As described above, a 3D printed object may be formed by selectively hardening powdered build material in particular patterns. In some examples, this may be done in a layer-wise fashion, wherein individual slices of a 3D printed object are formed. This process is repeated layer-by-layer until the 3D printed object is formed. In general, apparatuses for generating three-dimensional objects may be referred to as additive manufacturing devices (100). The additive manufacturing device (100) described herein may correspond to three-dimensional printing systems, which may also be referred to as three-dimensional printers.

In one example, the additive manufacturing device (100) includes a build material distributor (102) to successively deposit layers of the powdered build material onto a bed. Each layer of the powdered build material that is fused in the bed forms a slice of the 3D printed object such that multiple layers of fused build material form the entire 3D printed object.

The additive manufacturing device (100) also includes at least one energy source (104) to selectively fuse portions of the layer of powdered build material to form a slice of the 3D printed object. During fusing, the energy source (104) emits intense and focused energy. Application of the energy to the layer of powdered build material causes the powdered build material to absorb the energy and at least partially melt. The energy source (104) can selectively emit pulses of energy on a voxel by voxel basis to fuse all or a portion of the area that the energy source (104) pass over. The voxel relating to the operation of an energy source (104) can be defined with reference to the width of its beam.

Upon cooling, the particles of powdered build material exposed to the energy harden together to form a solid body. Accordingly, after each layer of powdered build material is deposited, the energy source (104) is activated to selectively harden portions of the powdered build material that correspond to a slice of the 3D printed object. Repeating this sequence forms multiple slices that ultimately form the 3D printed object.

As set out in the claims, the at least one energy source is multiple lasers formed in a two-dimensional array. In some examples, the array of lasers is stationary and individually addressable. That is, during the fusing process, the lasers coinciding or aligning with the 2D slice of a layer are activated to fuse the powdered build material at the same time, while those lasers that do not coincide or align with the 2D slice are not activated. In other examples the array of lasers moves across the build area of the additive manufacturing device la(100). In this example, the individual lasers may still be individually addressable.

The lasers may be of any desired type of any power output and wavelength range. While lasers in the infrared region may be used, using lasers with a shorter wavelength may be focused more precisely, whereby higher resolution of the 3D printed object may be possible. An energetic IR laser (such as a CO₂ laser) may be used, for example. As specific examples, the lasers may be any of, Nd:YAG lasers, Yb-doped fiber lasers, and excimer lasers. Other examples of energy sources (104) that may be used include ultraviolet lasers or other ultraviolet energy sources. Using lasers to harden the material provides for an accurate and effective way to solidify portions of build material that is not as susceptible to thermal bleed as other forms of additive manufacturing. While this paragraph describes particular types of lasers and energy sources (104), other types of energy sources may be used. In some examples, the energy source (104) may be something other than an IR lamp.

The additive manufacturing device (100) also includes a detailing agent distributor (106) to generate a uniform property distribution across a surface of a layer of powdered build material by depositing a detailing agent. That is, as described above, a detailing agent may cool, or otherwise inhibit the fusing/binding of respective areas of powdered build material. In one particular example, the detailing agent cools respective portions of the build material so as to generate a uniform temperature distribution across it. For example, as described above, centers of slices of the 3D printed object may be hotter than outside areas of the slice. During cooling, these hotter areas may cool down more slowly and remain molten longer, which could result in non-uniformities across the body of the slice and/or geometric inaccuracies in the resulting part. Accordingly, the detailing agent cools hot parts such that there is a more uniform temperature distribution across the surface of the portion of the powdered build material that is to form the 3D printed object. The detailing agent distributor (106) may also apply detailing agent outside of the boundaries of the slice so as to prevent unintended partial, or complete, fusing of adjacent build material.

The detailing agent may be of a variety of formulations. For example, the detailing agent may be water or water-based. As it ejects agent at a per-voxel level, the detailing agent distributor (106) allows for high resolution and highly precise agent deposition such that areas of cooling may be highly localized and specific.

The agent that is deposited is free of fusing agent. A fusing agent may be a compound that causes the powdered build material to fuse together or otherwise solidify when exposed to a quantity of energy, such as from infrared light. Accordingly, in accordance with the claims, the agent does not take part in the operation of fusing the powdered build material particles together, and this fusing process is instead performed by the energy source (104).

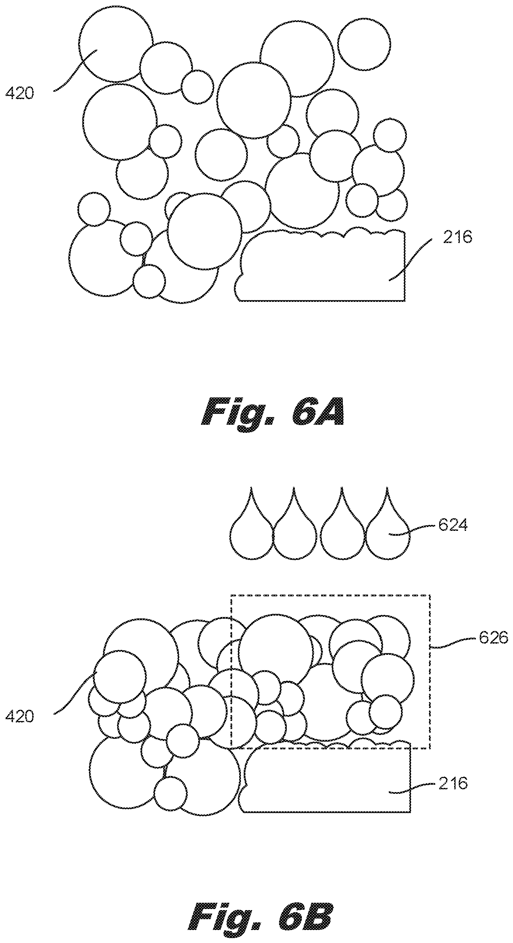

As will be described below in connection with Figs. 6A-7D, the detailing agent distributor (106) may operate either before, after, or concurrently with the energy source (104) which hardens certain areas of the layers of powdered build material. Accordingly, the present additive manufacturing device (100) provides a system that provides for highly localized and accurate deposition of detailing agent such that uniform temperature distributions or other desirable temperature distributions can be generated.

As such, the present additive manufacturing device (100) not only heats certain voxels via action of the energy source (104) but can also cool the voxels via the action of the detailing agent distributor (106) and distributed detailing agent.

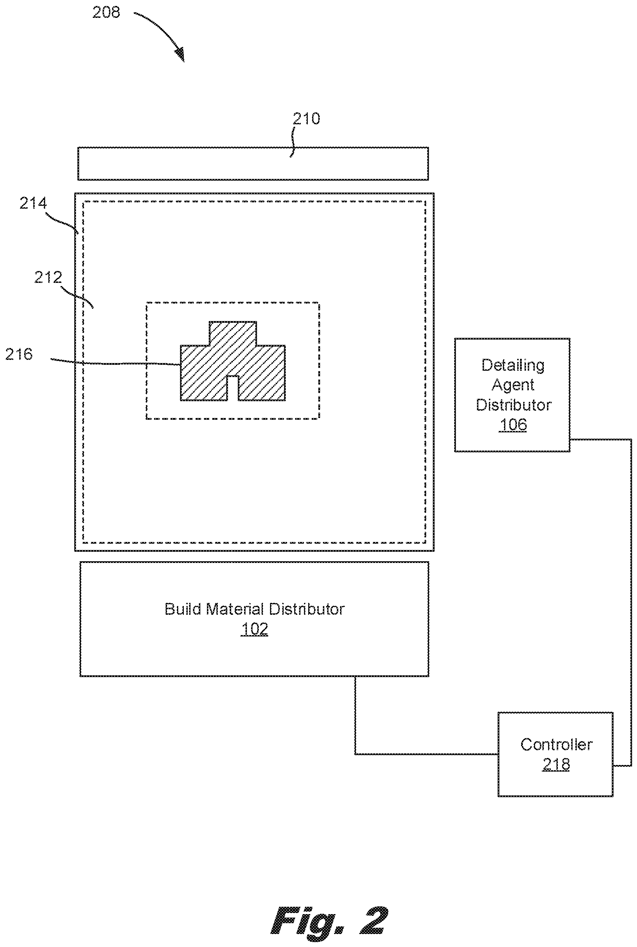

Fig. 2 is a simplified top view of an additive manufacturing system (208) to generate target property distributions across a layer of powdered build material, according to an example of the principles described herein. In an example of an additive manufacturing process, a layer of build material may be formed in a build area (212). As used in the present specification and in the appended claims, the term "build area" refers to an area of space wherein the 3D printed object (216) is formed. The build area (212) may refer to a space bounded by a bed (214). The build area (212) may be defined as a three-dimensional space in which the additive manufacturing system (208) can fabricate, produce, or otherwise generate a 3D printed object (216). That is, the build area (212) may occupy a three-dimensional space on top of the bed (214) surface. In one example, the width and length of the build area (212) can be the width and the length of bed (214) and the height of the build area (212) can be the extent to which bed (214) can be moved in the z direction. Although not shown, an actuator, such as a piston, can control the vertical position of bed (214).

The bed (214) may accommodate any number of layers of powdered build material. For example, the bed (214) may accommodate up to 4,000 layers or more. In an example, a number of build material supply receptacles may be positioned alongside the bed (214). Such build material supply receptacles source the powdered build material that is placed on the bed (214) in a layer-wise fashion.

In Fig. 2 and others, the 3D printed object (216) is indicated in a patterned fill to distinguish the fused powdered build material as compared to the free unfused powdered build material that surrounds it.

The additive manufacturing system (208) includes an additive manufacturing device (Fig. 1, 100) that includes a build material distributor (102) and detailing agent distributor (106). The build material distributor (102) may acquire powdered build material from build material supply receptacles, and deposit such acquired material as a layer in the bed (214), which layer may be deposited on top of other layers of powdered build material already processed that reside in the bed (214). In some examples, the build material distributor (102) may be a material coater, such as a hopper, a blade and/or a roller to dispense and spread the powdered build material.

In some examples, the build material distributor (102) may be coupled to a scanning carriage. In operation, the build material distributor (102) places build material in the build area (212) as the scanning carriage moves over the build area (212) along the scanning axis. While Fig. 2 depicts the build material distributor (102) as being orthogonal to the detailing agent distributor (106), in some examples the build material distributor (102) may be in line with the detailing agent distributor (106).

Fig. 2 also depicts the detailing agent distributor (106). As described above, the detailing agent distributor (106) deposits a detailing agent to generate a target thermal distribution, such as one that is more uniform showing less temperature variation than would otherwise be exhibited. In some examples, this may be either within the boundaries of the slice of the 3D printed object (216) to generate a uniform temperature profile across a surface of the slice or outside of the boundaries of the 3D printed object (216) to prevent thermal bleed.

In the first case, that is when depositing detailing agent within the boundaries of the slice, the detailing agent distributor (106) may deposit the detailing agent in a variety of patterns. For example, the detailing agent distributor (106) may deposit a uniform concentration of the detailing agent across the portion of the layer of powdered build material that is to receive the detailing agent, that is the portion to be cooled.

In other examples, the detailing agent distributor (106) deposits a gradient of the detailing agent with a concentration of the detailing agent decreasing going from locations where there is an expectation of higher temperatures towards locations of lower expected temperatures. For example, as described above portions near the center of the slice of the 3D printed object (216) may be expected to have higher temperatures due in part to the reduced thermal transfer away from these locations. Similarly, peripheral portions of the slice may be expected to have lower temperatures due to the increased thermal transfer at these locations. Accordingly, the detailing agent may be deposited to a more concentrated degree at the central locations as compared to the more peripheral locations.

In the second case, that is when depositing detailing agent outside of the boundaries of the slice of the 3D printed object (216), the deposition may be similarly uniform or a gradient. In one particular example, the portion of the layer of powdered build material that is to receive the detailing agent is between fused portions of a layer of powdered build material which do not contact each other. This region may be between two closely, but non-contacting portions of one object (216) as between the pillars depicted in Fig. 2. In another example, this region may be between two separate objects (216) that are being simultaneously formed.

In some examples, the detailing agent distributor (106) includes at least one liquid ejection device to distribute a functional agent onto the layers of build material. A liquid ejection device may include at least one printhead (e.g., a thermal ejection based printhead, a piezoelectric ejection based printhead, etc.). In some examples, the detailing agent distributor (106) is coupled to a scanning carriage, and the scanning carriage moves along a scanning axis over the build area (212). In one example, printheads that are used in inkjet printing devices may be used as a detailing agent distributor (106). In this example, the detailing agent may be a printing liquid. In other examples, a detailing agent distributor (106) may include other types of liquid ejection devices that selectively eject small volumes of liquid.

Fig. 2 also depicts the array (210) of lasers that selectively fuse portions of the layer of powdered build material, again in a pattern. In some examples, the array (210) of lasers is stationary over the build area (212) of the additive manufacturing system (208). However, in other examples, such as that depicted in Fig. 2, the array (210) moves over the build area (212) of the additive manufacturing system (208). That is, in some examples the array (210) may be coupled to a scanning carriage. In operation, the lasers in the array (210) fuse build material as the scanning carriage moves over the build area (212) along the scanning axis. While Fig. 2 depicts the array (210) in a particular resting position orthogonal to the detailing agent distributor (104) and build material distributor (102), the array (210) may be in any particular resting position.

The additive manufacturing system (210) also includes a controller (218) to control the additive manufacturing. The controller (218) may include various hardware components, which may include a processor and memory. The processor may include the hardware architecture to retrieve executable code from the memory and execute the executable code. As specific examples, the controller as described herein may include computer readable storage medium, computer readable storage medium and a processor, an application specific integrated circuit (ASIC), a semiconductor-based microprocessor, a central processing unit (CPU), and a field-programmable gate array (FPGA), and/or other hardware device.

The memory may include a computer-readable storage medium, which computer-readable storage medium may contain, or store computer usable program code for use by or in connection with an instruction execution system, apparatus, or device. The memory may take many types of memory including volatile and non-volatile memory. For example, the memory may include Random Access Memory (RAM), Read Only Memory (ROM), optical memory disks, and magnetic disks, among others. The executable code may, when executed by the controller (218) cause the controller (218) to implement at least the functionality of depositing build material, depositing property-changing agents, and activating lasers (Fig. 1, 108) in the array (106).

Specifically, the controller (218) controls the build material distributor (102) to deposit layers of powdered build material. Further, the controller (218) controls the detailing agent distributor (106) to deposit the detailing agent on layers of the powdered build material. The controller (218) also controls the array (210) of lasers. That is, the controller (218) passes a signal to the array (210) to activate certain of the lasers. As described above, each of the lasers is individually-addressable such that the controller (218) may individually activate each laser. Specifically, a subset of the array (210) of lasers may be activated which coincides with a slice of the 3D printed object (216).

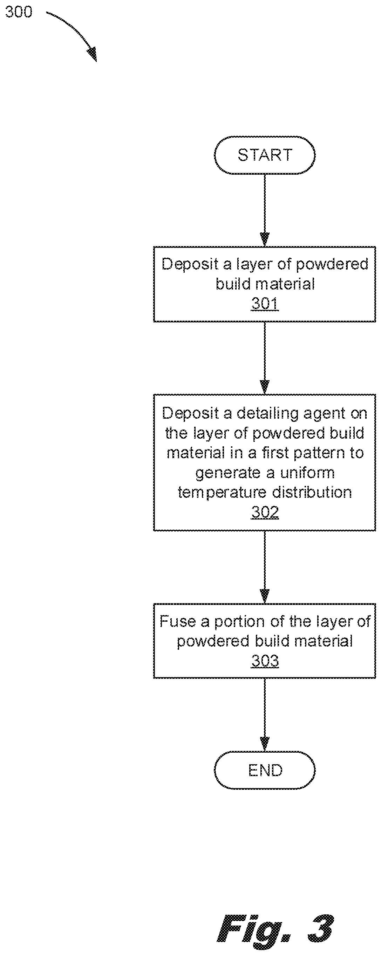

Fig. 3 is a flow chart of a method (300) for generating target property distributions across a layer of powdered build material, according to an example of the principles described herein. In this method (300), detailing agents are printed on the powdered build material, at voxel level, to realize the desired thermal history. Within each layer, an array (Fig. 2, 210) of lasers is used to fuse the powdered build material based on the geometry of the object before and/or after inkjetting. That is, while Fig. 3 depicts a particular order to the operations, the operations may be performed in any order. Examples of the operations in different orders are provided below in connection with Figs. 6A-7D.

As described above, additive manufacturing involves the layer-wise deposition of powdered build material and fusing of certain portions of that layer to form a slice of a 3D printed object (Fig. 2, 216). Accordingly, in this example, the method (300) includes depositing (block 301) a layer of powdered build material. This includes sequential activation, per slice, of a build material distributor (Fig. 1, 102) and the scanning carriages to which it may be coupled so that it distributes the build material across the surface of the bed (Fig. 2, 214).

Following deposition (block 301) of a layer of powdered build material, a detailing agent is deposited (block 302) on the layer in a predetermined pattern. As described above, such a deposition (block 302) inside boundaries of the powdered build material results in a uniform temperature distribution across a portion of the powdered build material that is to form a slice of a 3D printed object (Fig. 2, 216). That is, there may be a non-uniform temperature distribution across the slice for any number of reasons, and the detailing agent may cool the recently fused build material, or may alter absorption characteristics of powdered build material prior to fusion.

Such a deposition (block 302) may be by inkjet printheads such as a thermal inkjet printhead or a piezoelectric inkjet printhead. Similar to the build material distributor (Fig. 1, 102), the detailing agent distributor (Fig. 1, 106) may be coupled to a scanning carriage such that they are moved over the layer of powdered build material and the detailing agent therein deposited in a particular pattern. Using inkjet printheads facilitates highly accurate deposition of corresponding agents, which allows for high resolution of a resulting multi-property 3D printed object (Fig. 2, 216).

A portion of the layer of powdered build material is then fused (block 303) to form a slice of the 3D object (Fig. 2, 216). Such fusion is done by selectively activating a subset of lasers in the array (Fig. 2, 210) of lasers that coincides with the slice. That is, as discussed above, the fusing lasers emit energy on the powdered build material, which raises the temperature of the build material and causes the build material to fuse together or solidify.

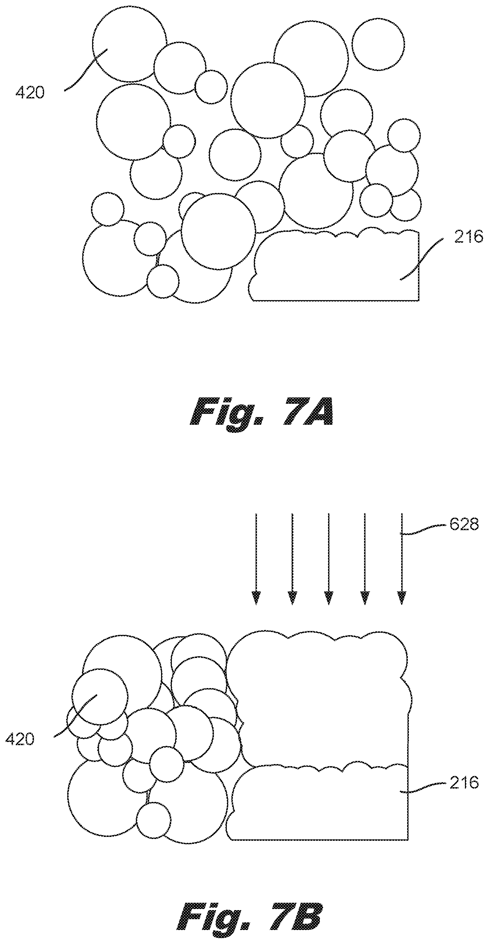

In some examples, fusing (block 303) a portion of the layer of powdered build material occurs before deposition (block 302) of the detailing agent. An example of this scenario is indicated in Figs. 7A-7D. In another example, fusing (block 303) a portion of the layer of powdered build material occurs after deposition (block 302) of the detailing agent. An example of this scenario is indicated in Figs. 6A-6D. In yet another example, fusing (block 303) a portion of the layer of powdered build material occurs concurrently with deposition (block 302) of the detailing agent.

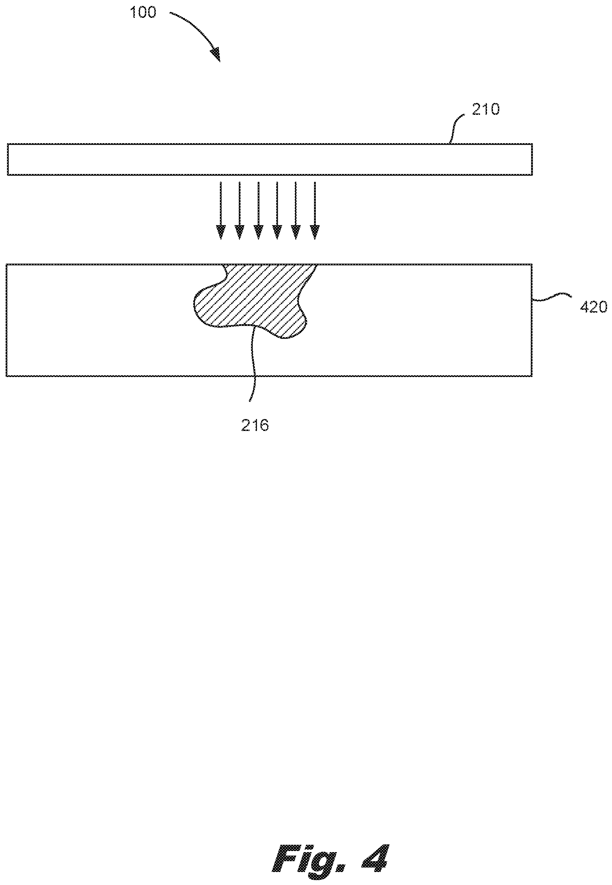

Fig. 4 is a side view of an additive manufacturing device (100) to generate uniform property distributions across a layer of powdered build material (420), according to another example of the principles described herein. Specifically, Fig. 4 depicts the array (210) of lasers as it is positioned over a build area (Fig. 2, 212) that contains a volume of build material (420) as well as the 3D printed object (216) formed therein. As described above, each laser in the array (210) emits energy towards particular portions of the powdered build material (420) that corresponds to a slice of the 3D printed object (216) such that those portions that absorb the energy from the lasers fuse together.

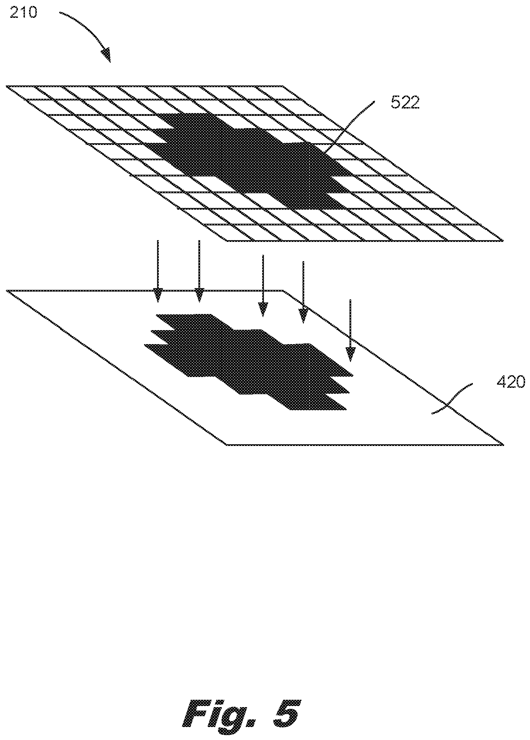

Fig. 5 is an isometric view of the laser array (210) over a build area (Fig. 2, 212) of an additive manufacturing device (Fig. 1, 100), according to an example of the principles described herein. As set out in the claims, the array (210) is two-dimensional and may overlay the entire area of the build area (Fig. 2, 212).

As described above, in some examples the array (106) moves over the surface of the build area (Fig. 2, 212) as depicted in Fig. 2. However, in other examples, the array (210) may be stationary over the build area (Fig. 2, 212) of the additive manufacturing device (Fig. 1, 100). In this example, a subset of the lasers (522) are activated, which subset coincides with a to-be-formed slice of the 3D printed part (Fig. 2, 216). For example, as depicted in Fig. 5, a layer of a 3D printed object (Fig. 2, 216) may have a particular cross-sectional area as depicted by the black boxes on the powdered build material (420) layer. A set of lasers (522) that corresponds to these black boxes are activated such that they emit fusing energy towards the powdered build material (420). This may be done as each laser (522) is individually addressable. That is, the controller (Fig. 1, 106) may activate just those lasers (522) that correspond to the particular pattern, which activated lasers (522) are depicted in Fig. 5 as black boxes in the array (210).

Those lasers (522) that do not correspond to the particular pattern of the slice of the 3D printed object (Fig. 2, 216), represented in Fig. 5 as white boxes in the array (210), may be entirely deactivated, i.e., not emitting. In some examples, the lasers (522) which do not coincide with the slice may be activated, but at a lower energy as compared to those lasers (522) which do coincide with the slice. Temperature differences across the build material (420) may have negative side-effects on the production of the 3D printed object (Fig. 2, 216).

Specifically, having a large temperature difference between the object area and the free powder area may cause large temperature differences between the 3D printed object (Fig. 2, 216) and the part boundary region, etc., which may result in part deformation, incomplete fusion, etc. Therefore, it may be the case that the temperature of the free powder area is kept just below the melting point for the powdered build material (420) and the temperature of the to-be-formed slices during the fusing process is kept just above the melting point of the powdered build material (420). This may be done in a number of ways, for example as described above by activating lasers (522) which do not coincide with the slice to a lesser degree. Accordingly, by maintaining other lasers (522) at a particular activation energy while allowing certain lasers (522) to have a higher, and fusing, activation energy, provides a more consistent thermal gradient across the surface of the build material (420) layer, thus reducing the negative effects of increased thermal differences. In another example, an overhead infrared lamp could be used to heat up the entire layer to close to the melting point, and then use the corresponding lasers (522) to heat up the area that is to form the slice to just above the melting point.

Note that as each slice of the 3D printed object (Fig. 2, 216) may have a different cross-section, different subsets of lasers (522) may be activated for each layer of powdered build material (420) that is deposited. Accordingly, such a stationary multi-laser array (210) reduces the amount and complexity of additive manufacturing device (Fig. 1, 100) components.

Moreover, note that while Fig. 5 depicts a certain number and size of lasers (522) in the array (210), these components have been enlarged for illustration purposes, and an array (210) may include any number of lasers (522). For example, the array (210) may include one million lasers (522).

Figs. 6A - 6D depict additive manufacturing with laser arrays (Fig. 2, 210) to generate a uniform property distribution across a layer of powdered build material, according to an example of the principles described herein. Specifically, Figs. 6A - 6D depict a scenario where the detailing agent distributor (Fig. 1, 106) deposits the detailing agent before fusing of the build material (420). In Fig. 6A, at least one layer of the 3D printed object (216) has been formed. That is, it is has already been fused. Accordingly, a new layer is formed by activating the build material distributor (Fig. 1, 102) to lay down a layer of powdered build material (420) over the fused portion of the 3D printed object (216).

Then as depicted in Fig. 6B, a detailing agent (624) may be deposited on the powdered build material (420). The detailing agent (624) is absorbed into the powdered build material (420) to define an agent-affected zone (626). As described above, this may include a uniform distribution or a gradient distribution which is based on the expected temperature that would result from the application of energy from the energy source (Fig. 1, 104).

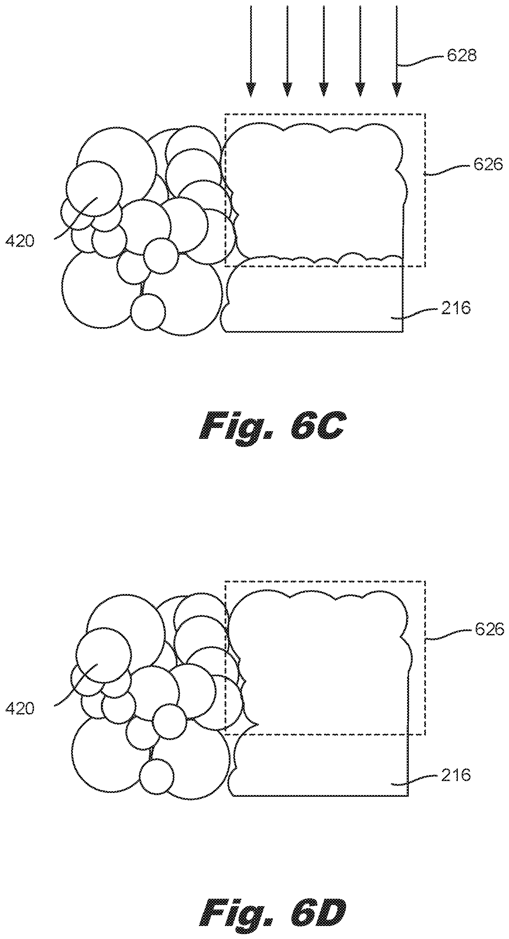

As depicted in Fig. 6C, the lasers (Fig. 5, 522) of the array (Fig. 2, 210) are activated to emit energy, indicated by the arrows (628), to partially melt and fuse the powdered build material (420) directly underneath the lasers (Fig. 5, 522). In this example, the deposition of the detailing agent before fusing reduces the absorption characteristics in the powdered build material in the agent-affected zone (626) based on the concentration of detailing agent deposited thereon. That is, the energy has less of an affect on the powdered build material (420) in the agent-affected zone (626). Accordingly, a desired thermal profile, for example a uniform thermal profile, can be generated by depositing detailing agent on a portion of a layer of build material (420) that is to receive energy from the lasers (Fig. 5, 522). Once heat is removed, i.e., the lasers (Fig. 5, 522) are de-activated, a new layer of the 3D printed object (216) results as depicted in Fig. 6D.

Figs. 7A - 7D depict additive manufacturing with laser arrays (Fig. 2, 210) to generate a uniform property distribution across a layer of powdered build material, according to an example of the principles described herein. Specifically, Figs. 7A - 7D depict a scenario where the detailing agent distributor (Fig. 1, 106) deposits the detailing agent after fusing of the build material (320). In Fig. 7A, at least one layer of the 3D printed object (216) has been formed. That it, is has already been fused. Accordingly, a new layer is formed by activating the build material distributor (Fig. 1, 102) to lay down a layer of powdered build material (420) over the fused portion of the 3D printed object (216).

As depicted in Fig. 7B, the lasers (Fig. 5, 522) of the array (Fig. 2, 210) are activated to emit energy, indicated by the arrows (628), to partially melt and fuse the powdered build material (420) directly underneath the lasers (Fig. 5, 522).

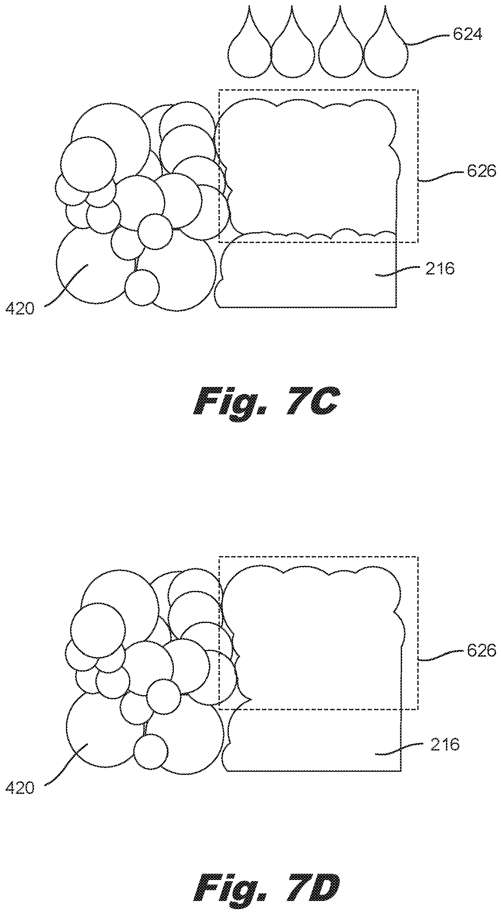

Then, as depicted in Fig. 7C, a detailing agent (624) may be deposited on the fused powdered build material (420). In this example, the detailing agent (624) may cool down the fused powdered build material in the agent-affected zone (626). Doing so may be preparatory to a subsequent layer of powdered build material (420). That is, as described above, if an underlying layer is too hot, it may inadvertently fuse the subsequent layer prior to that subsequent layer being exposed to the energy source (Fig. 1, 104). Accordingly, by cooling the recently-fused build material in the agent-affected zone (626), subsequent layers can be deposited without risk of inadvertent fusing resulting from contact with too hot underlying powdered build material (420). In some examples, this deposition of detailing agent may be uniform or as a gradient. Once agent deposition is complete, a new layer of the 3D printed object (216) results as depicted in Fig. 7D.

Such devices and methods 1) provide a uniform temperature distribution across slices of 3D printed objects and the surrounding powdered build material, 2) provide 3D printed objects with greater geometric accuracy, 3) change thermal properties at a per-voxel resolution, and 4) fuse individual layers of a 3D printed object. However, it is contemplated that the devices and methods disclosed herein may address other matters and deficiencies in a number of technical areas.

## Claims

1. A method (300), comprising:
depositing (301) a layer of powdered build material (420);
depositing (302), in a predetermined pattern, a detailing agent (624) on the layer of powdered build material to generate a uniform temperature distribution across a portion of the powdered build material that is to form a slice of a three-dimensional (3D) printed object (216); and
fusing (303) a portion of the layer of powdered build material to form the slice of the 3D printed object by selectively activating a subset of lasers (104, 522) in an array of lasers (210), whereby the subset of lasers coincides with the slice;
and whereby the fusing is performed by the subset of lasers and free of fusing agent.

2. The method of claim 1, wherein fusing a portion of the layer of powdered build material occurs before deposition of the detailing agent.

3. The method of claim 1, wherein fusing a portion of the layer of powdered build material occurs after deposition of the detailing agent.

4. An additive manufacturing device (100, 208), comprising:
a build material distributor (102) to deposit layers of powdered build material (420);
at least one energy source (104) to selectively fuse portions of a layer of powdered build material to form a slice of a three-dimensional (3D) printed object; and
a detailing agent distributor (106) to generate a uniform property distribution across a portion of the layer of powdered build material by depositing a detailing agent;
wherein:
the at least one energy source comprises multiple lasers formed in a two-dimensional array (210); and
each laser of the array of lasers is individually addressable; and whereby the additive manufacturing device further comprises a controller (218) configured to operate the additive manufacturing device according to any of the above method claims.

5. The additive manufacturing device of claim 4, wherein the controller is configured to operate the device such that the portion of the layer of powdered build material that is to receive the detailing agent is outside of a boundary of the slice of the 3D printed object.

6. The additive manufacturing device of claim 4, wherein the controller is configured to operate the device such that the portion of the layer of powdered build material that is to receive the detailing agent is inside of a boundary of the slice of the 3D printed object.

7. The additive manufacturing device of claim 6, wherein:
the controller is configured to operate the device such that the detailing agent distributor is to deposit a gradient of the detailing agent; and
a concentration of the detailing agent is to decrease going from a location of higher expected temperature towards a location of lower expected temperature for the 3D printed object.

8. The additive manufacturing device of claim 4, wherein the controller is configured to operate the device such that the detailing agent distributor is to deposit a uniform concentration of the detailing agent across the portion of the layer of powdered material that is to receive the detailing agent.

9. The additive manufacturing device of claim 4, wherein 2. the controller is configured to operate the device such that the portion of the layer of powdered build material that is to receive the detailing agent is between fused portions of a layer of powdered build material which do not contact one another.

10. The additive manufacturing device according to claim 4, whereby:
the controller is configured to operate the device such that the build material distributor is to deposit layers of powdered build material onto a bed (214);
the detailing agent distributor is to:
deposit the detailing agent within boundaries of the slice of the three-dimensional (3D) printed object to generate the uniform temperature profile across a surface of the slice; and
deposit the detailing agent around borders of the slice to prevent thermal bleed.

11. The additive manufacturing device of claim 10, wherein the array of lasers is configured to be stationary over a build area (212) of the additive manufacturing device

12. The additive manufacturing device of claim 10, wherein the array of lasers is configured to move over a build area (212) of the additive manufacturing device.

## Patentansprüche

1. Verfahren (300), das umfasst:
Ablagern (301) einer Schicht aus pulverförmigem Baumaterial (420);
Ablagern (302), in einem vorbestimmten Muster, eines Detaillierungsmittels (624) auf die Schicht aus pulverförmigem Baumaterial, um eine gleichmäßige Temperaturverteilung über einen Teil des pulverförmigen Baumaterials hinweg zu erzeugen, der dazu dient, eine Scheibe eines dreidimensionalen (3D) gedruckten Objekts (216) zu bilden; und
Schmelzen (303) eines Teils der Schicht aus pulverförmigem Baumaterial, um die Scheibe des 3D-gedruckten Objekts durch selektives Aktivieren einer Untergruppe von Lasern (104, 522) in einer Anordnung von Lasern (210) zu bilden, wodurch die Untergruppe von Lasern mit der Scheibe zusammenfällt; und
wodurch das Schmelzen durch die Untergruppe von Lasern und frei von Schmelzmitteln ausgeführt wird.

2. Verfahren nach Anspruch 1, wobei ein Schmelzen eines Teils der Schicht aus pulverförmigem Baumaterial vor einer Ablagerung des Detaillierungsmittels erfolgt.

3. Verfahren nach Anspruch 1, wobei ein Schmelzen eines Teils der Schicht aus pulverförmigem Baumaterial nach der Ablagerung des Detaillierungsmittels erfolgt.

4. Additivfertigungsvorrichtung (100, 208), die umfasst:
einen Baumaterialverteiler (102), um Schichten aus pulverförmigem Baumaterial (420) abzulagern;
mindestens eine Energiequelle (104), um Teile einer Schicht aus pulverförmigem Baumaterial selektiv zu schmelzen, um eine Scheibe eines dreidimensionalen (3D) gedruckten Objekts zu bilden; und
einen Detaillierungsmittelverteiler (106), um eine gleichmäßige Eigenschaftsverteilung über einen Teil der Schicht aus pulverförmigem Baumaterial hinweg durch Ablagern eines Detaillierungsmittels zu erzeugen;
wobei:
die mindestens eine Energiequelle mehrere Laser umfasst, die in einer zweidimensionalen Anordnung (210) gebildet sind; und
jeder Laser der Anordnung von Lasern einzeln adressierbar ist; und wodurch die Additivfertigungsvorrichtung ferner eine Steuerung (218) umfasst, die dazu konfiguriert ist, die Additivfertigungsvorrichtung nach einem der obigen Verfahrensansprüche zu betreiben.

5. Additivfertigungsvorrichtung nach Anspruch 4, wobei die Steuerung dazu konfiguriert ist, die Vorrichtung derart zu betreiben, dass der Teil der Schicht aus pulverförmigem Baumaterial, der dazu dient, das Detaillierungsmittel aufzunehmen, außerhalb einer Abgrenzung der Scheibe des 3D-gedruckten Objekts liegt.

6. Additivfertigungsvorrichtung nach Anspruch 4, wobei die Steuerung dazu konfiguriert ist, die Vorrichtung derart zu betreiben, dass der Teil der Schicht aus pulverförmigem Baumaterial, der dazu dient, das Detaillierungsmittel aufzunehmen, innerhalb einer Abgrenzung der Scheibe des 3D-gedruckten Objekts liegt.

7. Additivfertigungsvorrichtung nach Anspruch 6, wobei:
die Steuerung dazu konfiguriert ist, die Vorrichtung derart zu betreiben, dass der Detaillierungsmittelverteiler dazu dient, einen Gradienten des Detaillierungsmittels abzulagern; und
eine Konzentration des Detaillierungsmittels dazu dient, von einer Stelle mit höherer erwarteter Temperatur zu einer Stelle mit niedrigerer erwarteter Temperatur hin für das 3D-gedruckte Objekt abzunehmen.

8. Additivfertigungsvorrichtung nach Anspruch 4, wobei die Steuerung dazu konfiguriert ist, die Vorrichtung derart zu betreiben, dass der Detaillierungsmittelverteiler dazu dient, eine gleichmäßige Konzentration des Detaillierungsmittels über den Teil der Schicht aus pulverförmigem Material hinweg abzulagern, der dazu dient, das Detaillierungsmittel aufzunehmen.

9. Additivfertigungsvorrichtung nach Anspruch 4, wobei die Steuerung dazu konfiguriert ist, die Vorrichtung derart zu betreiben, dass der Teil der Schicht aus pulverförmigem Baumaterial, der dazu dient, das Detaillierungsmittel aufzunehmen, zwischen geschmolzenen Teilen einer Schicht aus pulverförmigem Baumaterial liegt, die einander nicht berühren.

10. Additivfertigungsvorrichtung nach Anspruch 4, wodurch:
die Steuerung dazu konfiguriert ist, die Vorrichtung derart zu betreiben, dass der Baumaterialverteiler dazu dient, Schichten aus pulverförmigem Baumaterial auf ein Bett (214) abzulagern;
der Detaillierungsmittelverteiler zu Folgendem dient:
Ablagern des Detaillierungsmittels innerhalb von Abgrenzungen der Scheibe des dreidimensionalen (3D) gedruckten Objekts, um das gleichmäßige Temperaturprofil über eine Oberfläche der Scheibe hinweg zu erzeugen; und
Ablagern des Detaillierungsmittels um Ränder der Scheibe herum, um thermisches Ausbluten zu verhindern.

11. Additivfertigungsvorrichtung nach Anspruch 10, wobei die Anordnung von Lasern dazu konfiguriert ist, über einem Baubereich (212) der Additivfertigungsvorrichtung stationär zu sein.

12. Additivfertigungsvorrichtung nach Anspruch 10, wobei die Anordnung von Lasern dazu konfiguriert ist, sich über einen Baubereich (212) der Additivfertigungsvorrichtung zu bewegen.

## Revendications

1. Procédé (300), comprenant :
le dépôt (301) d'une couche de matériau de construction en poudre (420) ;
le dépôt (302), selon un schéma prédéterminé, d'un agent détaillant (624) sur la couche de matériau de construction en poudre pour générer une distribution de température uniforme sur une partie du matériau de construction en poudre qui doit former une tranche d'un objet imprimé en trois dimensions (3D) (216) ; et
la fusion (303) d'une partie de la couche de matériau de construction en poudre pour former la tranche de l'objet imprimé en 3D en activant sélectivement un sous-ensemble de lasers (104, 522) dans un réseau de lasers (210), selon lequel le sous-ensemble de lasers coïncide avec la tranche ; et
selon lequel la fusion est réalisée par le sous-ensemble de lasers et exempte d'agent de fusion.

2. Procédé selon la revendication 1, dans lequel la fusion d'une partie de la couche de matériau de construction en poudre a lieu avant le dépôt de l'agent détaillant.

3. Procédé selon la revendication 1, dans lequel la fusion d'une partie de la couche de matériau de construction en poudre a lieu après le dépôt de l'agent détaillant.

4. Dispositif de fabrication additive (100, 208) comprenant :
un distributeur de matériau de construction (102) pour déposer des couches de matériau de construction en poudre (420) ;
au moins une source d'énergie (104) pour fusionner sélectivement des parties d'une couche de matériau de construction en poudre afin de former une tranche d'un objet imprimé en trois dimensions (3D) ; et
un distributeur d'agent détaillant (106) pour générer une distribution des propriétés uniforme sur une partie de la couche de matériau de construction en poudre en déposant un agent détaillant ;
dans lequel :
l'au moins une source d'énergie comprend plusieurs lasers formés dans un réseau bidimensionnel (210) ; et
chaque laser du réseau de lasers est adressable individuellement ; et dans lequel le dispositif de fabrication additive comprend en outre un dispositif de commande (218) configuré pour faire fonctionner le dispositif de fabrication additive selon l'une quelconque des revendications du procédé ci-dessus.

5. Dispositif de fabrication additive selon la revendication 4, dans lequel le dispositif de commande est configuré pour faire fonctionner le dispositif de sorte que la partie de la couche de matériau de construction en poudre qui doit recevoir l'agent détaillant se trouve à l'extérieur d'une limite de la tranche de l'objet imprimé en 3D.

6. Dispositif de fabrication additive selon la revendication 4, dans lequel le dispositif de commande est configuré pour faire fonctionner le dispositif de sorte que la partie de la couche de matériau de construction en poudre qui doit recevoir l'agent détaillant se trouve à l'intérieur d'une limite de la tranche de l'objet imprimé en 3D.

7. Dispositif de fabrication additive selon la revendication 6, dans lequel :
le dispositif de commande est configuré pour faire fonctionner le dispositif de telle sorte que le distributeur d'agent détaillant doit déposer un gradient de l'agent détaillant ; et
une concentration de l'agent détaillant doit diminuer en allant d'un emplacement où la température prévue est plus élevée vers un emplacement où la température prévue est plus basse pour l'objet imprimé en 3D.

8. Dispositif de fabrication additive selon la revendication 4, dans lequel le dispositif de commande est configuré pour faire fonctionner le dispositif de sorte que le distributeur d'agent détaillant doit déposer une concentration uniforme d'agent détaillant sur la partie de la couche de matériau en poudre qui doit recevoir l'agent détaillant.

9. Dispositif de fabrication additive selon la revendication 4, dans lequel le dispositif de commande est configuré pour faire fonctionner le dispositif de telle sorte que la partie de la couche de matériau de construction en poudre qui doit recevoir l'agent détaillant se trouve entre des parties fusionnées d'une couche de matériau de construction en poudre qui n'entrent pas en contact l'une avec l'autre.

10. Dispositif de fabrication additive selon la revendication 4, dans lequel :
le dispositif de commande est configuré pour faire fonctionner le dispositif de telle sorte que le distributeur de matériau de construction doit déposer des couches de matériau de construction en poudre sur un lit (214) ;
le distributeur d'agent détaillant doit :
déposer l'agent détaillant à l'intérieur des limites de la tranche de l'objet imprimé en trois dimensions (3D) pour générer le profil de température uniforme sur toute la surface de la tranche ; et
déposer l'agent détaillant autour des bords de la tranche afin d'éviter les exsudations thermiques.

11. Dispositif de fabrication additive selon la revendication 10, dans lequel le réseau de lasers est configuré pour être stationnaire sur une zone de construction (212) du dispositif de fabrication additive.

12. Dispositif de fabrication additive selon la revendication 10, dans lequel le réseau de lasers est configuré pour se déplacer sur une zone de construction (212) du dispositif de fabrication additive.
